# EUROPEAN PATENT SPECIFICATION

(11) **EP 2 830 259 B1**
(45) Date of publication and mention of the grant of the patent: **06.07.2016**
(21) Application number: 12871767.5
(22) Date of filing: 21.05.2012
(51) Int. Cl.: H04L 12/24, H04L 12/26

(54) **METHOD AND SYSTEM FOR MANAGING END-TO-END SERVICE PERFORMANCE BASED ON THRESHOLD, AND NETWORK MANAGER**
VERFAHREN UND SYSTEM ZUR VERWALTUNG DER END-TO-END-DIENSTLEISTUNG AUF BASIS EINES SCHWELLENWERTES UND NETZWERKMANAGER
PROCÉDÉ ET SYSTÈME POUR GÉRER LES PERFORMANCES D'UN SERVICE DE BOUT EN BOUT SUR LA BASE D'UN SEUIL, ET GESTIONNAIRE DE RÉSEAU ASSOCIÉ

(30) Priority: 23.03.2012 CN 201210081819
(43) Date of publication of application: 28.01.2015
(73) Proprietor: ZTE Corporation, Shenzhen, Guangdong 518057 (CN)
(72) Inventor: YANG, Anyin, Shenzhen Guangdong 518057 (CN)
(74) Representative: Tischner, Oliver
(86) International application number: PCT/CN2012/075820
(87) International publication number: WO 2013/139082

(56) References cited:
- WO-A2-02/15481
- CN-A- 1 829 175
- CN-A- 101 345 656
- CN-A- 101 873 592
- US-A1- 2010 118 709

## Description

### FIELD

The disclosure relates to the field of mobile communications, and more particularly to a method for managing end-to-end service performance based on a threshold, a system for managing end-to-end service performance based on a threshold and a network manager.

### BACKGROUND

In existing communication network, there are various devices which play diversified roles and individually possess some important parameters that directly influence the functions and the efficiency of the whole network, including the throughput, the delay, the jitter and the safety of the whole network.

Existing network managers all carry out performance statistics on the parameters of the various devices to help a network administrator analyze the performance of the devices, determine a fault bottleneck and forecast a fault tendency.

With the development of communication technologies, more and more heterogeneous networks emerge in existing communication networks; since different heterogeneous networks are established in networking environments, network management products for different networking environments are developed, including: Internet Protocol (IP) network manager, Packet Transport Network (PTN) manager, fixed network manager, etc. The enrichment of network applications also urges the emergence of complicated end-to-end services which are generally constructed by a plurality of devices, and it happens in an operator network that a service is established between devices of different providers, thus, a comprehensive network manager capable of synchronously managing a variety of network devices is gradually developed.

Existing network managers put the emphasis of end-to-end service performance management on the performance of devices, for example, the incoming traffic of a port; as the hierarchy of the performance statistics point is relatively low, it is difficult to determine which service performance will be influenced by the performance of the devices; moreover, existing end-to-end service performance management focuses on independent devices while an end-to-end service is characterized in crossing network elements, that is, involving a plurality of devices, the performance obtained from the statistics on independent devices does not match with the actual performance of a service well.

Existing network manager simply decomposes service threshold performance into device performance and does not summarize service performance summarization or only summarizes service performance through a simple data processing with the actual existence of a service ignored, making it impossible to locate a service performance problem accurately. Further, currently, the optimization of end-to-end service performance requires the human participation, resulting in labor waste and a relatively complicated realization process.

It should be noted that different from the conventional end-to-end service, the end-to-end service mentioned herein is a protocol-supported service which has been standardized in the communication industry and takes a transmission path and a management domain into consideration, for example, a service of which the transmission path and the management domain are a Virtual Private Network (VPN), a Pseudo Wire (PW) and a channel. An end-to-end service is hereinafter simply referred to as service.

US 2010/0118709 discusses a method and apparatus for providing end to end virtual private network performance management.

### SUMMARY

In view of this, the disclosure is mainly intended to provide a method for managing end-to-end service performance based on a threshold, a system for managing end-to-end service performance based on a threshold and a network manager so as to address the problems that it is difficult to determine the relationship between device performance and service performance, service performance does no accord with the reality and a service performance problem cannot be accurately positioned, and to realize the automatic optimization of service performance.

To this end, the technical solutions of the disclosure are implemented as follows.

A method for managing end-to-end service performance based on a threshold is provided as cited in claim 1.

The disclosure also provides a system for managing end-to-end service performance based on a threshold as cited in claim 6.

The disclosure also provides a network manager as cited in claim 10.

According to the method for managing end-to-end service performance based on a threshold, the system for managing end-to-end service performance based on a threshold and the network manager provided in the disclosure, a service threshold performance task and a method for converting the service threshold performance task to a device threshold performance task are set, and during the running process of a system, the service threshold performance task is converted to a device threshold performance task, each device reports its own threshold performance data; the service threshold performance data is calculated according to the threshold performance data reported by each device; all the threshold performance data related to a service is compared with a set threshold to generate or eliminate an alarm according to the result of the comparison; and all the threshold performance data related to the service is distributed to each device for optimizing service threshold performance data. It can be known that a mapping mechanism for the mapping of service performance into device performance is proposed in the disclosure to strictly distinguish service performance from device performance while taking into consideration of the mutual influence of service performance and device performance, thus, the disclosure addresses the problem that it is difficult to determine the relationship between device performance and service performance.

Further, in the disclosure, after service performance is converted to device performance, service threshold performance data is calculated according to the threshold performance data reported by each device rather than service performance is simply denoted with each independent device performance; as a result, the service performance obtained in the disclosure is more accordant with the reality, and a service performance problem can be positioned accurately.

Meanwhile, the statistics on supporting service performance is also introduced in the disclosure, which is of much help to the analysis on the most direct reason for an upper service performance problem as the performance bottleneck of many services is caused by the performance problem of a lower supporting service.

In the disclosure, all the calculated threshold performance data related to a service is distributed to each device, and each device can automatically optimize the performance data related to the service according to a set optimization algorithm, requiring no human participation.

### BRIEF DESCRIPTION OF THE DRAWINGS

Fig. 1 is a flowchart illustrating the flowchart of a method for managing end-to-end service performance based on a threshold disclosed herein;
Fig. 2 is a flowchart illustrating the flow of setting a service threshold performance task and a method for converting the service threshold performance task to a device threshold performance task; and
Fig. 3 is a schematic diagram illustrating the structure of a system for managing end-to-end service performance based on a threshold disclosed herein.

### DETAILED DESCRIPTION

The basic idea of the disclosure lies in that a service threshold performance task and a method for converting the service threshold performance task to a device threshold performance task are set, and during the running process of a system, the service threshold performance task is converted to a device threshold performance task, each device reports its own threshold performance data; service threshold performance data is calculated according to the threshold performance data reported by each device; all the threshold performance data related to a service is compared with a set threshold to generate or eliminate an alarm according to the result of the comparison; and all the threshold performance data related to the service is distributed to each device for optimizing service threshold performance data.

The service includes an upper service which is an end-to-end service mentioned herein and a lower supporting service, and all the threshold performance data related to the service includes the threshold performance data of the upper service, the threshold performance data of the lower supporting service and the threshold performance data of the device.

The method disclosed herein also includes presenting the threshold performance data of the device and the threshold performance data of the service to a network administrator.

The device described herein may be affiliated to a plurality of network managers or cross a plurality of network environments and network management systems.

The disclosure is described below in detail with reference to accompanying drawings when read in conjunction with specific embodiments.

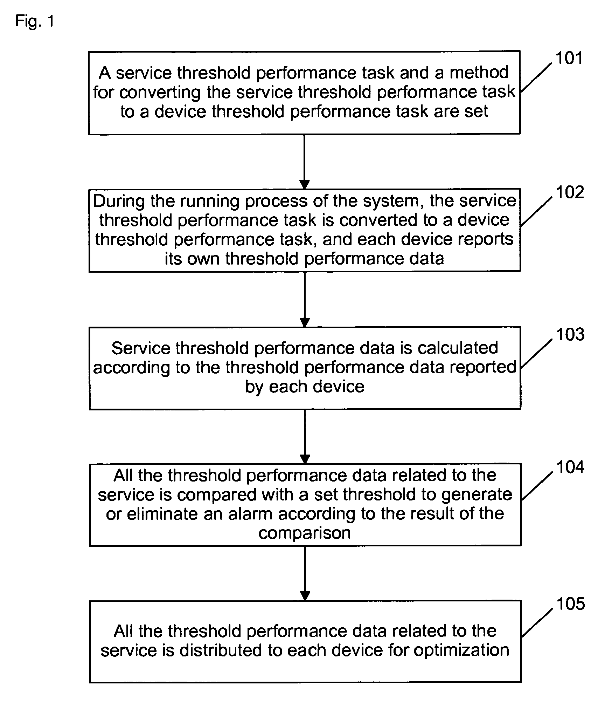

Fig. 1 is a flowchart illustrating the realization flow of the method for managing end-to-end service performance based on a threshold disclosed herein, and as shown in Fig. 1, the method includes the following steps.

Step 101: A service threshold performance task and a method for converting the service threshold performance task to a device threshold performance task are set.

In this step, a service threshold performance task and a method for converting the service threshold performance task to a device threshold performance task are set, meanwhile, a supporting service threshold performance task is also set which is also a service threshold performance service; this recursive relation is ended when a service has no more supporting services.

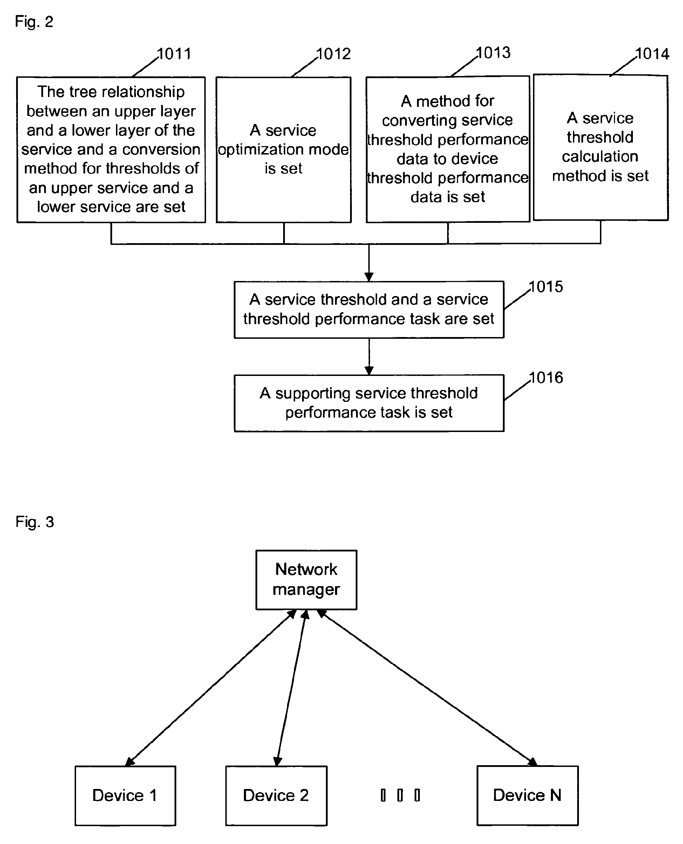

As shown in Fig. 2, this step is specifically realized through the following steps.

Step 1011: The tree relationship between an upper layer and a lower layer of the service and a conversion method for thresholds of an upper service and a lower service are set.

Specifically, the supporting services of a service are set, for example, a supporting service of a VPN is a pseudo wire. Here, a multi-layer service system may be set, for example, a supporting service of the pseudo wire is a channel, then a three-layer service relationship: VPN<---pseudo wire<---channel, is formed. In the relationship between an upper layer and a lower layer of the service, the lower layer requiring the setting of VPN traffic performance statistics corresponds to the traffic performance of the pseudo wire. Thus, to implement traffic statistics on the VPN, it is needed to implement the statistics on the traffic of the supporting service of the VPN, that is, the traffic of the pseudo wire.

The supporting service is set according to actual needs, a service may be set with no supporting services, for example, the channel service may be set with no supporting services. For example, if the statistics on channel performance is not desired in the statistics on the performance of the VPN, then only a two-layer relationship: VPN<---pseudo wire, may be set. It should be noted that a ring structure is forbidden in the setting of a supporting relationship, otherwise, there will be an endless loop, for example, a structure A<---B<---A, will cause an endless loop.

The conversion relationship between a service threshold and a supporting service threshold is also set in this step. It is needed to establish a supporting service threshold performance task when establishing the service threshold performance task. A supporting service also has a threshold which is determined according to the upper service the supporting service supports. For example, the threshold of the traffic of the pseudo wire may be set to be equal to that of the traffic of the upper VPN. The threshold of the supporting service may also be set to a specific value to represent that the supporting service is just an ordinary service performance task which takes no consideration of a threshold, that is, will never reach or exceed a threshold. The device performance task finally converted from such a service performance task taking no consideration of a threshold also takes no consideration of a threshold, that is, will never reach or exceed a threshold.

It should be noted that the supporting service is an ordinary service which will also be finally decomposed into a device during the actual running process of a system. The relationship among a service, a supporting service and a device may be that: a service may include a plurality of supporting services and one supporting service corresponds to a plurality of devices. The setting of the supporting service facilitates the accurate and rapid positioning of the source of a service performance fault in subsequent optimization, that is, by means of the supporting service, a faulted device can be quickly and accurately found.

Step 1012: A service optimization mode is set.

Specifically, the service optimization mode which is set includes adjusting parameters of a lower supporting service of a service, or adjusting the basic configuration of a device for a service having no lower supporting services, for example, adjusting the upper parameter of an interface.

This step is a preparation for the following automatic optimization. For example, three values, that is, an initial adjustment step, a fine-tuning step and a fine-tuning bottom line, may be set when optimizing the traffic of the VPN. In the optimization, by increasing the bandwidth of the lower PW by 600bps every time, that is, by the initial adjustment step, the last configuration is recovered when it happens for the first time that the performance is degraded after being optimized, then a fine-tuning data 10bps, that is, the fine-tuning step, instead of 600bps, is used to implement a fine-tuning operation. Afterwards, a fine-tuning operation is carried out using a fine-tuning rate -10bps every time when the performance is degraded after being optimized; if the performance is upgraded after being optimized, then a fine-tuning operation is carried out using the fine-tuning rate 10bps, this optimization operation is carried out until the fine-tuning rate is lower than or equal to 1bps; similarly, the optimization on the traffic of the PW can be realized by increasing the traffic of the supporting layer channel using the same algorithm on the condition that the bandwidth of the channel is increased by 500bps every time, the fine-tuning bandwidth is 5bps and a stop bandwidth is 1 bps. The optimization on the traffic of a channel may also be achieved using an algorithm similar to that used in the VPN traffic optimization except that the bandwidth of an access interface is adjusted, the initial adjustment step is 100bps, the fine-tuning step is 5bps, and the condition for stop is 1 bps.

Step 1013: A method for converting service threshold performance data to device threshold performance data is set.

Specifically, during the actual running process of the system, as the service threshold performance task will be finally decomposed into the threshold performance task of each device, the performance sampling point of a device to which service performance is converted and a device performance threshold corresponding to the device are set in this step. For example, the traffic of a Virtual Private Local Area Network Service (VPLS) may be mapped into the traffic of each Access Controller (AC), and the threshold of the traffic of the AC is set as the traffic threshold of the VPLS/the number of the ACs in the VPLS. The service includes a supporting service.

Here, the conversion method may also be used inversely. That is, the device threshold performance data may be converted to the service threshold performance data.

Step 1014: A service threshold calculation method is set.

Specifically, as the service threshold performance task will be finally converted to a device threshold performance task for execution and a comprehensive performance calculation is carried out on a cross-network element service using the measurement point value acquired by each device, it is needed here to set how to calculate the threshold performance data of the whole service according to the threshold performance data of the devices involved in the service. For example, the traffic threshold performance data of the VPLS may be set to be the total traffic of the ACs involved in the VPLS, and a calculation formula can be set as needed on the condition that the result of the calculation is beneficial for reflecting the essence of the problem and revealing the principal concern of the user.

It should be noted that the sequence of Steps 1011-1014 is optional.

Step 1015: A service threshold and a service threshold performance task are set.

Specifically, the service threshold will be finally associated with the service performance to form service threshold performance. The threshold serves as a determination basis for the following generation or elimination of an alarm, that is, an alarm is generated if the actual value is above the threshold or the actual value plus or minus an offset is above the threshold, or is eliminated when the actual value is below the threshold or the actual value plus or minus an offset is below the threshold.

A performance task is established for the service and bound with the configured service threshold to generate a service threshold performance task.

Here, an ID is also assigned to the service threshold performance task, in the case of a supporting service, the ID of the supporting service is the same as that of its upper service, and the ID of each device threshold performance task converted from the service threshold performance task is also the same as that of the service threshold performance task.

Step 1016: A supporting service threshold performance task is set.

Here, a threshold performance task is established for each supporting service of the service according to the setting of Step 1011, this recursive calling processing is implemented until the service has no more lower supporting service, specifically,
the threshold of a lower supporting service is obtained according to the conversion method set in Step 1011 for the conversion between an upper service threshold and a lower service threshold and then bound with a corresponding supporting service, thereby obtaining a supporting service threshold performance task.

Step 102: During the running process of the system, the service threshold performance task is converted to a device threshold performance task, and each device reports its own threshold performance data.

Here, during the running process of the system, it is needed to monitor the performance-related data of each device in real time for the service performance calculation in the subsequent process. In the implementation process, a counter may be set to record the device which reports threshold performance data and the time at which the device reports the threshold performance data, and the calculation of service performance data is started at a certain statistical moment at which the performance data of all devices is acquired.

This step is specifically realized through the following steps.

Step 1021: The devices involved in the service are decomposed from the service.

Specifically, during the running process of the system, the devices involved in the current service are decomposed from the current service according to the following decomposition principle: only the devices influencing the performance data of the service are decomposed, for example, in a VPN service, only a Provider Edge (PE) device and an Autonomous System Border Router (ASBR) are decomposed while intermediate devices are not decomposed.

Step 1022: The thresholds the devices should have are calculated.

Here, the thresholds the decomposed devices should have for the current service are calculated using the conversion method set in Step 1011 for the conversion between thresholds of an upper service and a lower service.

Step 1023: A device threshold performance task is established and executed.

Specifically, a device threshold performance task is established using the threshold calculated in Step 1022. For example, the threshold performance of the AC traffic of the PE device or ASBR should be calculated corresponding to the threshold performance of the traffic of the VPN.

Step 1024: The threshold performance data of the running device is reported.

Specifically, during the running process of the system, each device may report device threshold performance data to a service threshold performance monitoring module which is located at the side of the network manager. It is needed here to assign the ID described in Step 1015 to the device performance to associate the device performance with the service performance creating the device performance. When the monitoring module at the side of the network manager acquires device performance data, the device threshold performance may generate or eliminate, through a calculation, an alarm which will become an important condition for the generation or elimination of a service performance alarm.

Step 103: Service threshold performance data is calculated according to the threshold performance data reported by each device.

Specifically, the network manager calculates threshold performance data of the service and the supporting service using the method set in Step 1013 according to the threshold performance data reported by each device and received in Step 102.

Further, after Step 103, the method further includes storing all the threshold performance data related to the service.

Here, an ID assigned to the service is stored when the service threshold performance data and the threshold performance data of each device corresponding to the service are stored, the ID associates the same service threshold performance data with the threshold performance data of each relevant device and the supporting service threshold performance data to provide a basis for subsequent threshold performance presentation and analysis.

Step 104: All the threshold performance data related to the service is compared with a set threshold to generate or eliminate an alarm according to the result of the comparison.

Step 1041: The device threshold performance value of each device related to the service is acquired and compared with a set device threshold, if the threshold performance of at least one device generates an alarm, then a corresponding service threshold performance should generate an alarm indicating that a threshold is exceeded, and the alarm information may record the following content in detail: which device gives what alarm aiming at the performance of which service; the detection of an alarm generated by an optional supporting service threshold performance of the service also indicates that the threshold is exceeded, then the service also generates an alarm.

The fault or bottleneck of a lower supporting service or corresponding device performance will cause the fault or performance bottleneck of an upper service. When a supporting service generates an alarm, the supported service also generates an alarm, thus, an upper service should be informed of an alarm event after the generation of the alarm event.

Step 1042: If no alarm is generated by the device threshold performance or the supporting service threshold performance, then it is determined whether or not the service threshold performance calculated in Step 103 generates an alarm; if the service threshold performance calculated in Step 103 exceeds a threshold, then an alarm is generated, and the reason for the generation of the alarm is recorded in alarm information while an upper service is informed of the alarm event, otherwise, no alarm is generated.

Step 1043: A service alarm is eliminated when alarms of the device threshold performance, the supporting service threshold performance and the service threshold performance are all eliminated.

Here, if alarm of the device threshold performance or the lower supporting service threshold performance is eliminated, then whether or not the service threshold performance exceeds the threshold is determined again; as the last alarm of the service threshold performance is caused by the alarm of the device threshold performance or supporting service threshold performance, the alarm of the supported service threshold performance may be eliminated after the fault causing the alarm is eliminated. Thus, if it is confirmed that the alarm of the supported service threshold performance is eliminated, then an alarm elimination parameter is set and an alarm is eliminated.

In the disclosure, an upper supported service should be informed of the generation and the elimination of an alarm. As the generation of an alarm by a lower supporting service after a comparison operation will lead to the generation of an alarm by an upper service, the upper service must be informed of the alarm generated by the lower supporting service, and accordingly, when the alarm of the lower supporting service is eliminated, the upper service should be informed of the elimination for the upper service to calculate whether or not an alarm elimination condition is met because the last alarm of the upper service may be caused by the alarm of the lower service.

Step 105: All the threshold performance data related to the service is distributed to each device for optimization.

Specifically, as a service is a whole, collaborative optimization is needed, the lower supporting service involved in a service may need the threshold performance data of an upper supported service, or the device involved in the service may need to be aware of the performance data of other devices and the calculated performance data of the whole service, for this sake, in this step, the network manager distributes all the performance data related to the service, that is, the service, the supporting service involved in the service and the performance data of all devices, to the supporting service and each device, or directly distributes all the performance data related to the service to each device in the absence of a lower supporting service. After receiving all the performance data related to the service, each device adjusts the service threshold performance data according to a formerly set service optimization method. Similarly, after receiving all the performance data related to the service, the lower supporting service implements an optimization operation in the same way.

Further, after the service threshold performance data is optimized, the method further includes feeding the optimized service threshold performance data back to the network manager. The feedback method which can be flexibly set as needed may be as follows: when reporting device performance data, the device adds the adjusted performance data in the reported data. The network manager receives the service threshold performance data feedback for a subsequent service management.

The disclosure provides an outstanding automatic service performance optimization method according to which, as shown in Step 1012, which supporting service and which parameter should be optimized by executing which optimization steps using which algorithm are all determined when it is set to optimize a service, or a certain parameter of the bottom device is gradually optimized for a service having no supporting layer. For example, a PW parameter is adjusted when there is a problem with the performance of a VPN, and a channel parameter is adjusted when there is a problem with the PW parameter. For a service not subdivided any more, that is, a service having no supporting service, the sampling point parameter of a device is directly adjusted, for example, when there is a problem with channel performance, the Quality Of Service (QOS) configuration or the bandwidth of an interface is modified.

It should be noted that as device performance data is collected for many times within a period of time, the foregoing feedback operation and optimization operation may be carried out for many times, parameters may be adjusted for many times, and the parameters adjusted in each adjustment operation may be different; the current service threshold performance data may be compared with the former service threshold performance data to obtain as optimal parameter of the device as possible, thereby realizing a self-adaptive automatic service optimization process. Apparently, it is also applicable in the disclosure that an optimization operation is implemented only when service threshold performance data is beyond a preset threshold, that is, when an alarm is generated, but not after all the performance data related to a service is received by each device. The disclosure is intended to cover the two optimization modes.

Further, the method disclosed in the disclosure further includes presenting all the stored threshold performance data related to the service according to the demand of the user.

Specifically, as the service threshold performance data and the threshold performance data of each device corresponding to the service are stored after Step 103 and the ID assigned to the service is stored when the service/device threshold performance data is stored, a network administrator can view the performance data related to the service.

In the actual application, a user interface may be provided for the network administrator, the network administrator can input the service-related performance data needing checking on the user interface, and then the network manager queries the stored performance data according to the ID of a service and displays the found performance data for the network administrator. The performance data includes the performance data of a service, the performance data of a supporting service and the performance data of a device.

The disclosure also provides a system for managing end-to-end service performance based on a threshold which, as shown in Fig. 3, includes a network manager and devices (e.g. device 1, device 2, ... device n) involved in an end-to-end service, wherein
the network manager is configured to set a service threshold performance task and a method for converting the service threshold performance task to a device threshold performance task;
during the running process of the system, the network manager is configured to convert the service threshold performance task to a device threshold performance task, calculate service threshold performance data according to the threshold performance data reported by each device, compare all the threshold performance data related to a service with a set threshold to generate or eliminate an alarm according to the result of the comparison and distribute all the threshold performance data related to the service to each device for optimizing service threshold performance data; and
the device(s) is configured to report its own threshold performance data and implement an optimization operation according to all the threshold performance data related to the service distributed by the network manager.

When setting the service threshold performance task, the network manager also assigns a corresponding ID to the service threshold performance task; and the threshold performance tasks of all the lower supporting services and devices corresponding to the same upper service correspond to the same ID.

After calculating the service threshold performance data, the network manager further stores all the threshold performance data related to the service.

The network manager also presents all the stored threshold performance data related to the service according to the demand of the user.

The device also feeds the optimized service threshold performance data back to the network manager; and
accordingly, the network manager also receives the optimized service threshold performance data fed back from the device.

The disclosure also provides a network manager which is configured to set a service threshold performance task and a method for converting the service threshold performance task to a device threshold performance task.

During the running process of a system, the network manager converts the service threshold performance task to a device threshold performance task, calculates service threshold performance data according to the threshold performance data reported by each device, compares all the threshold performance data related to a service with a set threshold to generate or eliminate an alarm according to the result of the comparison and distributes all the threshold performance data related to the service to each device for optimizing service threshold performance data.

The network manager also assigns a corresponding ID to the service threshold performance task when setting the service threshold performance task.

After calculating the service threshold performance data, the network manager further stores all the threshold performance data related to the service.

The network manager also presents all the stored threshold performance data related to the service according to the demand of the user.

The network manager also receives the optimized service threshold performance data fed back from the device.

The mentioned above is merely preferred embodiments of the disclosure but is not to be construed as limitation to the protection scope of the disclosure which is only defined the appended claims.

## Claims

1. A method for managing end-to-end service performance based on a threshold, comprising:
setting a service threshold performance task and a method for converting the service threshold performance task to a device threshold performance task (101);
during a running process of a system where the method is implemented, converting the service threshold performance task to the device threshold performance task, and reporting, by each device, threshold performance data of the each device (102);
calculating service threshold performance data according to the threshold performance data reported by the each device (103);
comparing all threshold performance data related to a service with a set threshold and generating or eliminating an alarm according to a comparison result (104); and
distributing all the threshold performance data related to the service to the each device for optimizing service threshold performance data (105);
wherein the service comprises an upper service which is an end-to-end service and a lower supporting service;
all the threshold performance data related to the service accordingly comprises threshold performance data of the upper service, threshold performance data of the lower supporting service and device threshold performance data;
wherein a corresponding sequence number identifier (ID) is assigned to the service threshold performance task when the service threshold performance task is set, wherein threshold performance tasks of all lower supporting services and devices corresponding to a same upper service correspond to a same ID.

2. The method for managing end-to-end service performance based on a threshold according to claim 1, wherein the setting a service threshold performance task and a method for converting the service threshold performance task to a device threshold performance task comprises:
setting a tree relationship between an upper layer and a lower layer of the service and a method for converting an upper service threshold to a lower service threshold (1011); setting a service optimization mode(1012), a method for converting service threshold performance data to the device threshold performance data(1013), and a service threshold calculation method(1014); setting a service threshold and the service threshold performance task(1015); and setting a supporting service threshold performance task(1016).

3. The method for managing end-to-end service performance based on a threshold according to claim 1, further comprising: after calculating the service threshold performance data, storing all the threshold performance data related to the service.

4. The method for managing end-to-end service performance based on a threshold according to claim 3, further comprising: presenting all stored threshold performance data related to the service according to a demand of a user.

5. The method for managing end-to-end service performance based on a threshold according to claim 1, further comprising: after the each device implements an optimization operation, feeding optimized service threshold performance data back to a network manager.

6. A system for managing end-to-end service performance based on a threshold, comprising a network manager and each device involved in an end-to-end service,
wherein the network manager is configured to set a service threshold performance task and a method for converting the service threshold performance task to a device threshold performance task;
during a running process of the system, the network manager is configured to convert the service threshold performance task to the device threshold performance task, calculate service threshold performance data according to threshold performance data reported by the each device, compares all threshold performance data related to a service with a set threshold to generate or eliminate an alarm according to a comparison result and distributes all the threshold performance data related to the service to the each device for optimizing service threshold performance data; and
the each device is configured to report its own threshold performance data and implement an optimization operation according to all the threshold performance data related to the service distributed by the network manager;
wherein the network manager is also configured to assign a corresponding ID to the service threshold performance task when setting the service threshold performance task, wherein threshold performance tasks of all lower supporting services and devices corresponding to a same upper service correspond to a same ID.

7. The system for managing end-to-end service performance based on a threshold according to claim 6, wherein after calculating the service threshold performance data, the network manager further is configured to store all the threshold performance data related to the service.

8. The system for managing end-to-end service performance based on a threshold according to claim 7, wherein the network manager is also configured to present all stored threshold performance data related to the service according to a demand of a user.

9. The system for managing end-to-end service performance based on a threshold according to claim 6, wherein the each device is also configured to feed optimized service threshold performance data back to the network manager; and accordingly, the network manager is also configured to receive the optimized service threshold performance data fed back from the each device.

10. A network manager configured to set a service threshold performance task and a method for converting the service threshold performance task to a device threshold performance task, and further configured to, during a running process of a system, convert the service threshold performance task to the device threshold performance task, calculate service threshold performance data according to threshold performance data reported by each device, compare all threshold performance data related to a service with a set threshold to generate or eliminate an alarm according to a comparison result and distribute all the threshold performance data related to the service to the each device for optimizing service threshold performance data;
wherein the network manager also is configured to assign a corresponding ID to the service threshold performance task when setting the service threshold performance task, wherein threshold performance tasks of all lower supporting services and devices corresponding to a same upper service correspond to a same ID.

11. The network manager according to claim 10, wherein after calculating the service threshold performance data, the network manager further is configured to store all the threshold performance data related to the service.

12. The network manager according to claim 11, wherein the network manager is also configured to present all stored threshold performance data related to the service according to a demand of a user.

13. The network manager according to claim 10, wherein the network manager is also configured to receive optimized service threshold performance data fed back from the each device.

## Patentansprüche

1. Verfahren zum Verwalten einer End-to-End-Dienstleistungsleistung auf Basis eines Schwellenwerts, das umfasst:
Festlegen einer Dienstleistungs-Schwellenwertleistungsaufgabe und eines Verfahrens zum Umwandeln der Dienstleistungs-Schwellenwertleistungsaufgabe in eine Gerät-Schwellenwertleistungsaufgabe (101);
während eines laufenden Prozesses eines Systems, bei dem das Verfahren umgesetzt wird, Umwandeln der Dienstleistungs-Schwellenwertleistungsaufgabe in die Gerät-Schwellenwertleistungsaufgabe und Berichten von Schwellenwertleistungsdaten jedes Geräts (102) durch jedes Gerät;
Berechnen von Dienstleistungs-Schwellenwertleistungsdaten gemäß den durch jedes Gerät (103) berichteten Schwellenwertleistungsdaten;
Vergleichen aller Schwellenwertleistungsdaten, die mit einer Dienstleistung in Zusammenhang stehen, mit einem festgelegten Schwellenwert, und Erzeugen oder Löschen eines Alarms gemäß einem Vergleichsergebnis (104); und
Verteilen aller Schwellenwertleistungsdaten, die mit der Dienstleistung in Zusammenhang stehen, an jedes Gerät, um Dienstleistungs-Schwellenwertleistungsdaten (105) zu optimieren;
wobei die Dienstleistung eine obere Dienstleistung, bei der es sich um eine End-to-End-Dienstleistung handelt, und eine untere unterstützende Dienstleistung umfasst;
wobei alle Schwellenwertleistungsdaten, die mit der Dienstleistung in Zusammenhang stehen, dementsprechend Schwellenwertleistungsdaten der oberen Dienstleistung, Schwellenwertleistungsdaten der unteren unterstützenden Dienstleistung und Gerät-Schwellenwertleistungsdaten umfassen;
wobei der Dienstleistungs-Schwellenwertleistungsaufgabe eine entsprechende Sequenzzahlkennung (ID) zugewiesen wird, wenn die Dienstleistungs-Schwellenwertleistungsaufgabe festgelegt wird, wobei die Schwellenwertleistungsaufgaben aller unteren unterstützenden Dienstleistungen und Geräte, die einer gleichen oberen Dienstleistung entsprechen, einer gleichen ID entsprechen.

2. Verfahren zum Verwalten einer End-to-End-Dienstleistungsleistung auf Basis eines Schwellenwerts nach Anspruch 1, wobei das Festlegen einer Dienstleistungs-Schwellenwertleistungsaufgabe und eines Verfahrens zum Umwandeln der Dienstleistungs-Schwellenwertleistungsaufgabe in eine Gerät-Schwellenwertleistungsaufgabe umfasst:
Festlegen eines Baumverhältnisses zwischen einer oberen Schicht und einer unteren Schicht der Dienstleistung und eines Verfahrens zum Umwandeln eines oberen Dienstleistungsschwellenwerts in einen unteren Dienstleistungsschwellenwert (1011); Festlegen eines Dienstleistungsoptimierungsmodus (1012), eines Verfahrens zum Umwandeln von Dienstleistungs-Schwellenwertleistungsdaten in die Gerät-Schwellenwertleistungsdaten (1013) und eines Dienstleistungs-Schwellenwertberechnungsverfahrens (1014); Festlegen eines Dienstleistungsschwellenwerts und der Dienstleistungs-Schwellenwertleistungsaufgabe (1015); und Festlegen einer Schwellenwertleistungsaufgabe (1016) einer unterstützenden Dienstleistung.

3. Verfahren zum Verwalten einer End-to-End-Dienstleistungsleistung auf Basis eines Schwellenwerts nach Anspruch 1, das des Weiteren umfasst: nach Berechnen der Dienstleistungs-Schwellenwertleistungsdaten Speichern aller Schwellenwertleistungsdaten, die mit der Dienstleistung in Zusammenhang stehen.

4. Verfahren zum Verwalten einer End-to-End-Dienstleistungsleistung auf Basis eines Schwellenwerts nach Anspruch 3, das des Weiteren umfasst: Präsentieren aller gespeicherten Schwellenwertleistungsdaten, die mit der Dienstleistung in Zusammenhang stehen, gemäß einer Anforderung eines Benutzers.

5. Verfahren zum Verwalten einer End-to-End-Dienstleistungsleistung auf Basis eines Schwellenwerts nach Anspruch 1, das des Weiteren umfasst: nachdem jedes Gerät einen Optimierungsvorgang umgesetzt hat, Leiten von optimierten Dienstleistungs-Schwellenwertleistungsdaten zurück zu einem Netzwerkmanager.

6. System zum Verwalten einer End-to-End-Dienstleistungsleistung auf Basis eines Schwellenwerts, das einen Netzwerkmanager und jedes Gerät umfasst, das an einer End-to-End-Dienstleistung beteiligt ist,
wobei der Netzwerkmanager so konfiguriert ist, dass er eine Dienstleistungs-Schwellenwertleistungsaufgabe und ein Verfahren zum Umwandeln der Dienstleistungs-Schwellenwertleistungsaufgabe in eine Gerät-Schwellenwertleistungsaufgabe festlegt;
wobei der Netzwerkmanager so konfiguriert ist, dass er während eines laufenden Prozesses des Systems die Dienstleistungs-Schwellenwertleistungsaufgabe in die Gerät-Schwellenwertleistungsaufgabe umwandelt, Dienstleistungs-Schwellenwertleistungsdaten gemäß Schwellenwertleistungsdaten berechnet, die durch jedes Gerät berichtet werden, alle Schwellenwertleistungsdaten, die mit einer Dienstleistung in Zusammenhang stehen, mit einem festgelegten Schwellenwert vergleicht, um einen Alarm gemäß einem Vergleichsergebnis zu erzeugen oder zu löschen, und alle Schwellenwertleistungsdaten, die mit der Dienstleistung in Zusammenhang stehen, an jedes Gerät verteilt, um Dienstleistungs-Schwellenwertleistungsdaten zu optimieren; und
wobei jedes Gerät so konfiguriert ist, dass es seine eigenen Schwellenwertleistungsdaten berichtet und einen Optimierungsvorgang gemäß allen Schwellenwertleistungsdaten umsetzt, die mit der Dienstleistung in Zusammenhang stehen und vom Netzwerkmanager verteilt wurden;
wobei der Netzwerkmanager außerdem so konfiguriert ist, dass er der Dienstleistungs-Schwellenwertleistungsaufgabe beim Festlegen der Dienstleistungs-Schwellenwertleistungsaufgabe eine entsprechende ID zuweist, wobei Schwellenwertleistungsaufgaben aller unteren unterstützenden Dienstleistungen und Geräte, die einer gleichen oberen Dienstleistung entsprechen, einer gleichen ID entsprechen.

7. System zum Verwalten einer End-to-End-Dienstleistungsleistung auf Basis eines Schwellenwerts nach Anspruch 6, wobei der Netzwerkmanager des Weiteren so konfiguriert ist, dass er nach Berechnen der Dienstleistungs-Schwellenwertleistungsdaten alle Schwellenwertleistungsdaten, die mit der Dienstleistung in Zusammenhang stehen, speichert.

8. System zum Verwalten einer End-to-End-Dienstleistungsleistung auf Basis eines Schwellenwerts nach Anspruch 7, wobei der Netzwerkmanager außerdem so konfiguriert ist, dass er alle gespeicherten Schwellenwertleistungsdaten, die mit der Dienstleistung in Zusammenhang stehen, gemäß einer Anforderung eines Benutzers präsentiert.

9. System zum Verwalten einer End-to-End-Dienstleistungsleistung auf Basis eines Schwellenwerts nach Anspruch 6, wobei jedes Gerät außerdem so konfiguriert ist, dass es optimierte Dienstleistungs-Schwellenwertleistungsdaten zurück zum Netzwerkmanager leitet; und der Netzwerkmanager dementsprechend außerdem so konfiguriert ist, dass er die optimierten, von jedem Gerät zurückgeleiteten Dienstleistungs-Schwellenwertleistungsdaten empfängt.

10. Netzwerkmanager, der so konfiguriert ist, dass er eine Dienstleistungs-Schwellenwertleistungsaufgabe und ein Verfahren zum Umwandeln der Dienstleistungs-Schwellenwertleistungsaufgabe in eine Gerät-Schwellenwertleistungsaufgabe festlegt; und des Weiteren so konfiguriert ist, dass er während eines laufenden Prozesses des Systems die Dienstleistungs-Schwellenwertleistungsaufgabe in die Gerät-Schwellenwertleistungsaufgabe umwandelt, Dienstleistungs-Schwellenwertleistungsdaten gemäß Schwellenwertleistungsdaten berechnet, die durch jedes Gerät berichtet werden, alle Schwellenwertleistungsdaten, die mit einer Dienstleistung in Zusammenhang stehen, mit einem festgelegten Schwellenwert vergleicht, um einen Alarm gemäß einem Vergleichsergebnis zu erzeugen oder zu löschen, und alle Schwellenwertleistungsdaten, die mit der Dienstleistung in Zusammenhang stehen, an jedes Gerät verteilt, um Dienstleistungs-Schwellenwertleistungsdaten zu optimieren;
wobei der Netzwerkmanager außerdem so konfiguriert ist, dass er der Dienstleistungs-Schwellenwertleistungsaufgabe beim Festlegen der Dienstleistungs-Schwellenwertleistungsaufgabe eine entsprechende ID zuweist,
wobei Schwellenwertleistungsaufgaben aller unteren unterstützenden Dienstleistungen und Geräte, die einer gleichen oberen Dienstleistung entsprechen, einer gleichen ID entsprechen.

11. Netzwerkmanager nach Anspruch 10, wobei der Netzwerkmanager des Weiteren so konfiguriert ist, dass er nach Berechnen der Dienstleistungs-Schwellenwertleistungsdaten alle Schwellenwertleistungsdaten, die mit der Dienstleistung in Zusammenhang stehen, speichert.

12. Netzwerkmanager nach Anspruch 11, wobei der Netzwerkmanager außerdem so konfiguriert ist, dass er alle gespeicherten Schwellenwertleistungsdaten, die mit der Dienstleistung in Zusammenhang stehen, gemäß einer Anforderung eines Benutzers präsentiert.

13. Netzwerkmanager nach Anspruch 10, wobei der Netzwerkmanager außerdem so konfiguriert ist, dass er die optimierten, von jedem Gerät zurückgeleiteten Dienstleistungs-Schwellenwertleistungsdaten empfängt.

## Revendications

1. Procédé de gestion de performances de service de bout en bout sur la base d'un seuil, comprenant les étapes ci-dessous consistant à :
définir une tâche de performances seuil de service et un procédé de conversion de la tâche de performances seuil de service en une tâche de performances seuil de dispositif (101) ;
au cours d'un processus d'exécution d'un système dans lequel le procédé est mis en oeuvre, convertir la tâche de performances seuil de service en la tâche de performances seuil de dispositif, et signaler, par le biais de chaque dispositif, des données de performances seuil de chaque dispositif (102) ;
calculer des données de performances seuil de service selon les données de performances seuil signalées par chaque dispositif (103) ;
comparer la totalité des données de performances seuil connexes à un service à un seuil défini, et générer ou éliminer une alarme selon un résultat de comparaison (104) ; et
distribuer la totalité des données de performances seuil connexes au service à chaque dispositif, en vue d'optimiser des données de performances seuil de service (105) ;
dans lequel le service comprend un service supérieur qui correspond à un service de bout en bout et un service de prise en charge inférieure ;
la totalité des données de performances seuil connexes au service comporte en conséquence des données de performances seuil du service supérieur, des données de performances seuil du service de prise en charge inférieure et des données de performances seuil de dispositif ;
dans lequel un identifiant de numéro de séquence correspondant (ID) est affecté à la tâche de performances seuil de service lorsque la tâche de performances seuil de service est définie, dans lequel des tâches de performances seuil de la totalité des services de prise en charge inférieure et des dispositifs correspondant à un même service supérieur correspondent à un même ID.

2. Procédé de gestion de performances de service de bout en bout sur la base d'un seuil selon la revendication 1, dans lequel l'étape de définition d'une tâche de performances seuil de service et d'un procédé de conversion de la tâche de performances seuil de service en une tâche de performances seuil de dispositif comprend les étapes ci-dessous consistant à :
définir une relation arborescente entre une couche supérieure et une couche inférieure du service et un procédé de conversion d'un seuil de service supérieur en un seuil de service inférieur (1011) ; définir un mode d'optimisation de service (1012), un procédé de conversion de données de performances seuil de service en des données de performances seuil de dispositif (1013), et un procédé de calcul de seuil de service (1014) ; définir un seuil de service et la tâche de performance de seuil de service (1015) ; et définir une tâche de performance de seuil de service de prise en charge (1016).

3. Procédé de gestion de performances de service de bout en bout sur la base d'un seuil selon la revendication 1, comprenant en outre l'étape ci-après consistant à : suite au calcul des données de performances seuil de service, stocker la totalité des données de performances seuil connexes au service.

4. Procédé de gestion de performances de service de bout en bout sur la base d'un seuil selon la revendication 3, comprenant en outre l'étape ci-après consistant à : présenter la totalité des données de performances seuil connexes au service stockées selon une demande d'un utilisateur.

5. Procédé de gestion de performances de service de bout en bout sur la base d'un seuil selon la revendication 1, comprenant en outre l'étape ci-après consistant à : suite à la mise en oeuvre d'une opération d'optimisation par chaque dispositif, renvoyer des données de performances seuil de service optimisées à un gestionnaire de réseau.

6. Système destiné à gérer des performances de service de bout en bout sur la base d'un seuil, comprenant un gestionnaire de réseau et chaque dispositif impliqué dans un service de bout en bout ;
dans lequel le gestionnaire de réseau est configuré de manière à définir une tâche de performances seuil de service et un procédé de conversion de la tâche de performances seuil de service en une tâche de performances seuil de dispositif ;
au cours d'un processus d'exécution du système, le gestionnaire de réseau est configuré de manière à convertir la tâche de performances seuil de service en la tâche de performances seuil de dispositif, à calculer des données de performances seuil de service selon des données de performances seuil signalées par ledit chaque dispositif ; à comparer la totalité des données de performances seuil connexes à un service à un seuil défini en vue de générer ou d'éliminer une alarme selon un résultat de comparaison, et à distribuer la totalité des données de performances seuil connexes au service audit chaque dispositif, en vue d'optimiser des données de performances seuil de service ; et
ledit chaque dispositif est configuré de manière à signaler ses propres données de performances seuil et à mettre en oeuvre une opération d'optimisation selon la totalité des données de performances seuil connexes au service distribuées par le gestionnaire de réseau ;
dans lequel le gestionnaire de réseau est également configuré de manière à affecter un ID correspondant à la tâche de performances seuil de service lors de l'étape de définition de la tâche de performances seuil de service, dans lequel des tâches de performances seuil de la totalité des services de prise en charge inférieure et des dispositifs correspondant à un même service supérieur correspondent à un même ID.

7. Système destiné à gérer des performances de service de bout en bout sur la base d'un seuil selon la revendication 6, dans lequel, suite à l'étape de calcul des données de performances seuil de service, le gestionnaire de réseau est en outre configuré de manière à stocker la totalité des données de performances seuil connexes au service.

8. Système destiné à gérer des performances de service de bout en bout sur la base d'un seuil selon la revendication 7, dans lequel le gestionnaire de réseau est également configuré de manière à présenter la totalité des données de performances seuil connexes au service stockées selon une demande d'un utilisateur.

9. Système destiné à gérer des performances de service de bout en bout sur la base d'un seuil selon la revendication 6, dans lequel ledit chaque dispositif est également configuré de manière à renvoyer des données de performances seuil de service optimisées au gestionnaire de réseau ; et, en conséquence, le gestionnaire de réseau est également configuré de manière à recevoir les données de performances seuil de service optimisées renvoyées à partir dudit chaque dispositif.

10. Gestionnaire de réseau configuré de manière à définir une tâche de performances seuil de service et un procédé de conversion de la tâche de performances seuil de service en une tâche de performances seuil de dispositif, et en outre configuré de manière à, au cours d'un processus d'exécution d'un système, convertir la tâche de performances seuil de service en la tâche de performances seuil de dispositif, calculer des données de performances seuil de service selon des données de performances seuil signalées par chaque dispositif, comparer la totalité des données de performances seuil connexes à un service à un seuil défini en vue de générer ou d'éliminer une alarme selon un résultat de comparaison, et distribuer la totalité des données de performances seuil connexes au service audit chaque dispositif, en vue d'optimiser des données de performances seuil de service ;
dans lequel le gestionnaire de réseau est également configuré de manière à affecter un ID correspondant à la tâche de performances seuil de service lors de l'étape de définition de la tâche de performances seuil de service ;
dans lequel des tâches de performances seuil de la totalité des services de prise en charge inférieure et des dispositifs correspondant à un même service supérieur correspondent à un même ID.

11. Gestionnaire de réseau selon la revendication 10, dans lequel, suite à l'étape de calcul des données de performances seuil de service, le gestionnaire de réseau est en outre configuré de manière à stocker la totalité des données de performances seuil connexes au service.

12. Gestionnaire de réseau selon la revendication 11, dans lequel le gestionnaire de réseau est également configuré de manière à présenter la totalité des données de performances seuil connexes au service stockées, selon une demande d'un utilisateur.

13. Gestionnaire de réseau selon la revendication 10, dans lequel le gestionnaire de réseau est également configuré de manière à recevoir des données de performances seuil de service optimisées renvoyées à partir dudit chaque dispositif.
